# FASCICULE DE BREVET EUROPEEN

(11) **EP 4 379 184 B1**
(45) Date de publication et mention de la délivrance du brevet: **25.03.2026**
(21) Numéro de dépôt: 23214050.9
(22) Date de dépôt: 04.12.2023
(51) Int. Cl.: E21B 33/03, E21B 34/02

(54) **DISPOSITIF DE COUVERTURE D'UNE TÊTE ET STATION DE POMPAGE D'UN PUITS DE FORAGE**
KOPFABDECKUNGSVORRICHTUNG UND BOHRLOCHPUMPSTATION
HEAD COVER AND WELL PUMPING STATION

(30) Priorité: 04.12.2022 FR 2212732
(43) Date de publication de la demande: 05.06.2024
(73) Titulaire: Duran, Jean-Pierre, 66000 Perpignan (FR); Tixeire, Yannick, 66180 Villeneuve de la Raho (FR)
(72) Inventeur: Duran, Jean-Pierre, 66000 Perpignan (FR); Tixeire, Yannick, 66180 Villeneuve de la Raho (FR)
(74) Mandataire: Rhein, Alain

(56) Documents cités:
- WO-A1-2020/193990
- FR-A1- 2 992 997
- KR-B1- 101 814 501
- US-A- 1 196 146
- US-A- 4 370 919
- US-A- 5 056 548
- US-A1- 2014 262 311

## Description

### Domaine technique de l'invention

La présente invention entre dans le domaine du forage et du pompage de fluide, en particulier au travers d'un aquifère pour le pompage de l'eau.

De manière connue, en vue du pompage de l'eau souterraine, il est commun de réaliser un forage d'un puits au travers d'un aquifère, à savoir un sol enfermant une nappe d'eau souterraine.

Lors du forage, on creuse une cavité verticale dans le sol, jusqu'à atteindre une nappe d'eau souterraine. Les parois verticales de la cavité sont renforcées par un tube, en métal ou en matériau plastique. La partie supérieure du tube de la cavité forme une tête de puits de forage. Cette tête est refermée de manière étanche par un dispositif de couverture.

Plus avant, un tel dispositif de couverture de la tête d'un puits de forage est équipé de plusieurs éléments distincts, comme des canalisations assurant le passage de différents flux, en particulier du flux de l'eau extraite depuis la nappe souterraine au travers d'une conduite d'acheminement débouchant au niveau d'une sortie.

A ce titre, une pompe est aussi implantée, afin de permettre la circulation de l'eau depuis la nappe et l'alimentation de ladite sortie.

Une telle pompe peut être directement immergée au sein de la nappe souterraine. La tête permet alors le passage d'une alimentation électrique de ladite pompe immergée, ainsi que d'une conduite de remontée de l'eau jusqu'à ladite sortie.

Ladite pompe peut aussi être située en partie extérieure du forage, assurant de manière connue la remontée de l'eau le long de ladite conduite. Cette pompe extérieure peut montée sur le dispositif de couverture, qui est alors équipé d'un canal d'aspiration pour le passage des canalisations de pompage.

Des vannes et des commandes peuvent être rapportées, permettant notamment de contrôler l'activation de la pompe et de contrôle le débit de l'eau en sortie de la conduite d'acheminement.

D'autres éléments, comme des soupapes, peuvent assurer l'étanchéité et le maintien de la pression, ou encore des regards, servant de trappes d'accès en vue de la maintenance du puits, en particulier permettant d'accéder à la pompe quand elle est immergée.

Ces éléments rapportés sur le dispositif de couverture forment alors une station de pompage.

### État de la technique

Ceci étant, on connaît un dispositif de couverture de tête de puits de forage décrit dans le document FR 2 992 998. Un telle tête est prévue monobloc, pourvue d'un couvercle sous forme de disque dont la face inférieure est conformée complémentairement pour venir en portée et en fixation sur l'extrémité supérieure du tube de renfort de la cavité du puits de forage. La face inférieure présente plusieurs surfaces de portée concentriques et des raidisseurs radiaux.

De plus, la tête comprend encore un coude de distribution, avec une extrémité inférieure débouchant sous le disque du couvercle et destinée à être raccordée de manière étanche à ladite conduite d'alimentation. Le coude s'étend orthogonalement jusqu'à une extrémité opposée située au-dessus du couvercle et formant ladite sortie. Cette extrémité opposée est pourvue d'un filetage femelle, destiné à être raccordé via un filetage mâle, à un réseau de distribution, par exemple pour alimenter un réseau domestique d'eau potable, ou bien un réseau agricole d'arrosage et d'irrigation.

Si un tel dispositif de couverture permet aisément de refermer le tube de la cavité de forage et de se connecter à la conduite d'alimentation en eau, il présente un inconvénient lié à la pénétration de particules extérieures. En effet, lors de son raccordement, la sortie est ouverte et communique avec l'intérieur du dispositif, mais aussi la conduite d'alimentation. Des particules sont alors susceptibles de pénétrer et polluer la nappe. Ce risque de contamination est d'autant plus élevé si des raccordements successifs sont effectués, en particulier au moment des périodes d'irrigation, entraînant le montage et le démontage récurrents au réseau d'irrigation.

En outre, une telle pollution peut aussi provenir de reflux, lorsque plusieurs stations de pompage sont reliées entre elles, en raison de différences de pression les unes par rapport aux autres.

A ce titre, un autre inconvénient des dispositifs de couverture existants réside dans une perte de pression dans l'installation, en raison de fuites d'eau aux niveaux des jointures des différentes conduites et canalisation, ou bien aux niveaux des réseaux. Une fuite à la pression atmosphérique génère une entrée d'air susceptible de décharger la colonne d'eau de la conduite d'alimentation. Une colonne partiellement ou totalement vidée entraîne un réamorçage de la pompe, générant un surcoût en électricité et limitant la durée de vie de ladite pompe.

En outre, encore une fois, la perte de pression et la descente du niveau d'eau de la colonne entraîne un flux en sens inverse, favorisant la contamination.

De façon connexe, l'intervention sur une station de pompage avec une colonne d'eau chargée, complexifie considérablement la manutention, avec une charge conséquente et des appels d'air brusques lors de la mise à la pression atmosphérique par l'opérateur.

### Exposé de l'invention

L'invention a pour but de pallier les inconvénients de l'état de la technique en proposant un dispositif de couverture d'une tête de puits de forage, prévu pour assurer une obturation de la conduite d'alimentation, protégeant la nappe de toute intrusion de particules extérieures.

Pour ce faire, le dispositif de couverture comprend en partie supérieure du coude, une cage équipée d'un clapet anti-retour, mobile depuis une position de fermeture de l'arrivé d'eau de la conduite d'alimentation vers des positions d'ouverture, sous l'effet de la circulation du flux, et inversement. En particulier, ledit clapet est monté articulé en basculement pour venir automatiquement en position de fermeture, naturellement sous le simple effet de la gravité et de son poids. Ainsi basculant, le clapet peut s'ouvrir sous la simple pression de l'eau provenant de la conduite. Inversement, sans alimentation par pompage, ledit clapet revient en position de fermeture, obstruant l'arrivée.

Ainsi, le dispositif de couverture d'une tête de puits de forage, comprenant
- un corps pourvu d'un couvercle avec au moins une face inférieure de portée, conformée complémentairement pour venir en recouvrement d'un tube de ladite tête du puits de forage ;
- un coude traversant ledit couvercle et assurant la circulation selon une direction s'étendant depuis l'amont vers l'aval d'un flux de fluide, de préférence de l'eau, ledit coude étant orienté orthogonalement
   i) depuis une entrée amont débouchant verticalement sous ladite face inférieure, ladite entrée étant conformée complémentairement pour coopérer en fixation étanche avec une extrémité supérieure d'une conduite d'alimentation dudit puits de forage ;
   ii) jusqu'à une sortie aval débouchant horizontalement à l'extérieur.

Avantageusement, un tel dispositif de couverture se caractérise en ce que ledit coude comprend intérieurement une cage, avec un volume interne pourvu d'une arrivée reliée à ladite entrée, ladite arrivée étant située à la fin d'une portion tournante du coude de sorte qu'une section transversale de l'arrivée s'étende sensiblement verticalement, de préférence verticalement;
et en ce que
ledit dispositif de couverture comprend
   - un clapet monté mobile à l'intérieur du volume interne de la cage dudit coude, depuis une position de fermeture de ladite arrivée vers au moins une position d'ouverture, et inversement ;
ledit clapet étant monté libre en basculement par rapport audit coude, ledit clapet revenant naturellement, uniquement sous l'effet de la gravité et de son poids, depuis ladite au moins une position d'ouverture vers ladite position de fermeture.

Selon des caractéristiques additionnelles, non limitatives, ledit clapet peut comprendre
- un organe d'obturation, conformé complémentairement à une section de ladite arrivée ;
- un arbre de pivotement monté à une extrémité supérieure dudit organe ;
ladite cage comprenant en partie supérieure, un berceau conformé complémentairement pour recevoir en rotation libre ledit arbre de pivotement.

Selon un mode de réalisation, ledit organe est conformé en coque concave du côté aval, de sorte que la mise en circulation dudit flux selon ladite direction assure une pression contre une paroi amont de ladite coque et repousse ledit clapet vers ladite au moins une position d'ouverture.

Selon un mode de réalisation, ladite cage comprend supérieurement au moins une ouverture d'accès, débouchant à l'intérieur dudit volume interne de la cage dudit coude ;
le dispositif de couverture comprenant un bouchon de fermeture hermétique de ladite ouverture d'accès.

Selon un mode de réalisation, ledit bouchon comprend un chant inférieur, venant en verrouillage dudit arbre de pivotement du clapet au sein du berceau, en fermeture hermétique de ladite ouverture d'accès par ledit bouchon.

Selon un mode de réalisation, ledit bouchon comprend au moins un capteur de mesure du déplacement dudit clapet.

Selon un mode de réalisation, ledit dispositif de couverture peut comprendre des moyens de verrouillage en fermeture dudit bouchon, sous forme d'au moins deux anneaux solidaires dudit corps et dudit bouchon.

Selon un mode de réalisation, ladite sortie comprend une partie femelle filetée.

Selon un mode de réalisation, ledit dispositif de couverture peut comprendre un arceau de préhension rapporté en fixation amovible dudit corps.

Selon un mode de réalisation, ledit dispositif de couverture peut comprendre au moins un crochet ménagé en saillie dudit corps, ledit crochet étant ouvert vers la face inférieure dudit couvercle.

L'invention concerne encore une station de pompage d'un puits de forage équipé dudit dispositif de couverture d'une tête dudit puits de forage.

En particulier, une telle station de pompage comprend
- un tube de renforcement d'une cavité dudit puits de forage, avec une extrémité supérieure formant une tête dudit puits de forage ;
- des moyens de pompage, sous forme d'une pompe immergée ou externe ;
- une conduite d'alimentation s'étendant le long dudit tube jusqu'à ladite tête.

Avantageusement, elle se caractérise en ce qu'elle comprend, raccordé à ladite conduite et en recouvrement de ladite tête, un dispositif de couverture d'une tête dudit puits de forage selon l'invention.

Selon des caractéristiques additionnelles, non limitatives, une telle station de pompage peut comprendre, connectés audit dispositif de couverture, des moyens de commande de ladite pompe et du débit du flux de la conduite d'alimentation.

### Présentation des dessins

D'autres caractéristiques et avantages de l'invention ressortiront de la description détaillée qui va suivre des modes de réalisation non limitatifs de l'invention, en référence aux figures annexées, dans lesquelles :
[Fig.1] représente schématiquement une vue en perspective d'un mode de réalisation d'une station de pompage équipée d'un dispositif de couverture d'une tête de puits de forage ;
[Fig.2] représente schématiquement une vue selon une coupe verticale d'un mode de réalisation du dispositif de tête de forage, montrant notamment un clapet en position fermée ;
[Fig.3] représente schématiquement une vue similaire à la [Fig.2], montrant notamment un clapet dans une première position d'ouverture ;
[Fig.4] représente schématiquement une vue similaire à la [Fig.3], montrant notamment un clapet dans une deuxième position d'ouverture ;
[Fig.5] représente schématiquement une vue similaire à la [Fig.2], montrant notamment le bouchon supérieur ouvert, donnant accès à l'intérieur du dispositif et permettant l'insertion et l'extraction du clapet ;
[Fig.6] représente schématiquement une vue en perspective d'un mode de réalisation du clapet ;
[Fig.7] représente schématiquement une vue de profil de la [Fig.6] ; et
[Fig.8] représente schématiquement une vue en élévation de la [Fig.6].

### Description détaillée

La présente invention entre dans le cadre du pompage de fluide, en particulier de l'eau, prélevé depuis une nappe souterraine, au travers du forage d'un puits. Une fois le forage réalisé, la cavité est renforcée au moyen d'un tube, au sein duquel est placé au moins une conduite d'acheminement du flux en remontée depuis le fond du puits, ainsi qu'éventuellement une pompe immergée et de son câblage d'alimentation électrique.

Ensuite, il est nécessaire de refermer la partie supérieure du puits, à savoir la tête dudit puits.

A cet effet, l'invention concerne un dispositif 1 de couverture d'une tête de puits de forage.

Un tel dispositif 1 de couverture comprend un corps 2. Un tel corps 2 sert d'embase pour venir en appui sur la partie haute du tube de renforcement de la cavité de forage.

Le corps 2 sert aussi de support à différents éléments, tels que détaillés par la suite.

Plus avant, ledit corps 2 est pourvu d'un couvercle 3.

Un tel couvercle 3 présente au moins une face 30 inférieure de portée, conformée complémentairement pour venir en recouvrement d'un tube de ladite tête du puits de forage. En particulier, le couvercle 3 présente une forme complémentaire, pour venir en recouvrement de l'extrémité supérieure du tube, éventuellement pour venir recouvrir le pourtour et une zone autour dudit tube, avec sa face 30 inférieure qui vient en appui sur le chant de l'extrémité supérieure dudit tube.

Selon un mode préférentiel de réalisation, ledit couvercle 3 présente avantageusement une forme circulaire, formant un disque de recouvrement, avec une paroi 31 périphérique annulaire s'étendant en saillie sous ledit disque.

De façon connexe, le couvercle 3 présente aussi une face 32 supérieure. Plusieurs éléments du dispositif 1 de couverture peuvent être rapportés sur le corps 2, en face 32 supérieure du couvercle 3 et/ou le long de sa paroi 31 périphérique.

A ce titre, le dispositif 1 de couverture comprend un coude 4 traversant ledit couvercle 3. Un tel coude 4 forme un canal et assure la circulation selon une direction s'étendant depuis l'amont vers l'aval d'un flux de fluide, de préférence de l'eau.

On notera que la mise en circulation du fluide selon ledit flux est opérée par des moyens de pompage, à savoir la mise en fonctionnement d'au moins une pompe immergée ou prévue externe.

Plus avant, ledit coude 4 est orienté orthogonalement ou sensiblement orthogonalement.

En particulier, le coude 4 s'étend depuis une entrée 40 amont débouchant verticalement sous ladite face 30 inférieure du couvercle 3. Une telle entrée 40 est conformée complémentairement pour coopérer en fixation étanche avec une extrémité supérieure de la conduite d'alimentation dudit puits de forage.

De plus, ledit coude 4 s'étend jusqu'à une sortie 41 aval débouchant horizontalement à l'extérieur, à savoir au-dessus de la face 32 supérieure du couvercle 3.

Selon un mode préférentiel de réalisation, ladite sortie 41 comprend une partie femelle filetée, facilitant le nettoyage de ce filetage situé sur le pourtour de ladite sortie 41.

Ainsi, le coude 4 assure la liaison entre l'intérieur et l'extérieur du puits, permettant au flux de circuler au travers du dispositif 1 lorsqu'il est positionné en couverture dudit puits de forage.

Selon un mode de réalisation, le coude 4 et le couvercle 3 font partie intégrante dudit corps 2, de façon monobloc, à savoir formant une seule pièce en un même matériau. Préférentiellement, ledit corps 2 peut être réalisé en matériau à base plastique ou composite, préférentiellement par moulage ou injection plastique.

On notera que des renforts peuvent être prévus en face 30 inférieure du couvercle, afin d'améliorer la rigidité du dispositif 1 de couverture.

Avantageusement, le dispositif 1 de couverture prévoit de limiter les risques de pollution et de contamination du puits et de la conduite situés en amont.

Pour ce faire, ledit coude 4 comprend intérieurement une cage 5, avec un volume 50 interne pourvue d'une arrivée 51 reliée à ladite entrée 40. Ainsi, le coude 4 comprend, d'une part en amont, une première portion s'étendant depuis l'entrée 40 jusqu'à l'arrivée 51, débouchant au sein dudit volume 50 interne et reliant la conduite à l'intérieur de la cage 5. D'autre part en aval, le coude 4 comprend une deuxième portion s'étendant depuis le volume 50 interne jusqu'à la sortie 41, reliant la cage 5 à l'extérieur.

En outre, la section transversale de ladite arrivée 51 est orientée angulairement par rapport à l'horizontale et se situe le long de la première portion formant le virage du coude 4 depuis l'entrée 40. En particulier, la section transversale de l'arrivée 51 est inclinée selon un angle d'au moins 45°, notamment selon un angle supérieur à 45°. De préférence, l'arrivée 51 se situe à la fin de la première portion tournante du coude 4 et sa section transversale est inclinée selon un angle d'approximativement 90°, de préférence d'un angle de 90°, à savoir que ladite section transversale s'étend sensiblement verticalement, de préférence verticalement.

Selon le mode de réalisation correspondant, ladite cage 5 fait partie intégrante du corps 2 monobloc du dispositif 1 de couverture.

De plus, ledit dispositif 1 de couverture comprend encore un clapet 6 monté mobile à l'intérieur du volume 50 interne de la cage 5 dudit coude 4.

Dès lors, la cage 5 présente un volume 50 interne dimensionné pour assurer la mobilité dudit clapet 6.

A ce titre, un tel clapet 6 est prévu mobile depuis une position de fermeture de ladite arrivée 51 vers au moins une position d'ouverture, et inversement. En particulier, ledit clapet 6 peut se déplacer selon plusieurs positions d'ouverture, correspondant à des degrés différents d'obturations de l'arrivée 51. En d'autres termes, plus le clapet 6 est ouvert, plus la quantité de fluide circulant au travers de ladite arrivée 51 est important.

Avantageusement, ledit clapet 6 est monté libre en basculement par rapport audit coude 4. De plus, ledit clapet 6 revient naturellement, uniquement sous l'effet de la gravité et de son poids (i.e. de sa masse), depuis ladite au moins une position d'ouverture vers ladite position de fermeture. En d'autres termes, ledit clapet 6 oscille entre la position de fermeture, qui est son état d'équilibre stable, vers une ou plusieurs positions d'ouverture, dans lesquelles le clapet 6 est en déséquilibre et tend à retourner vers la position d'équilibre, en fermeture de ladite arrivée 51.

On notera que ledit clapet 6 est donc situé après l'arrivée 51, selon la direction d'écoulement du flux depuis l'amont vers l'aval.

Selon un mode préférentiel de réalisation, ledit clapet 6 est prévu basculant en suspension. En d'autres termes, le clapet 6 est maintenu supérieurement, au niveau d'un point de maintien et s'étend sous ledit point en position de fermeture de ladite arrivée 51.

Pour ce faire, ledit clapet 6 comprend un organe 60 d'obturation, conformé complémentairement à une section de ladite arrivée 51. En d'autres termes, l'organe 60 du clapet 6 présente la même forme, avec des dimensions similaires, que l'arrivée 51, de manière venir obturer ladite arrivée 51 en position de fermeture. Préférentiellement, comme ladite arrivée 51 présente une section circulaire, ledit organe 60 présente une section de forme identique, avec un diamètre égal ou préférentiellement supérieure, pour venir en obturation en recouvrement du chant aval de ladite arrivée 51.

Selon un mode de réalisation, ledit organe 60 est conformé en coque concave du côté aval. En d'autres termes, l'organe 60 est creux vers la sortie 41, ou encore bombé vers l'entrée 40, à savoir du côté de l'arrivée 51.

L'organe 60 peut avoir toute forme, arrondie, conique ou tronconique. Préférentiellement, l'organe 60 se présente sous forme d'une coquille hémisphérique ou sous forme de calotte de sphère.

Cette forme confère une surface de poussée du flux lors de sa mise en circulation dudit selon ladite direction qui assure une pression contre une paroi amont de ladite coque et repousse ledit clapet 6 vers ladite au moins une position d'ouverture. En outre, en fonction du débit dudit flux, la force appliquée contre ladite face amont de l'organe 60, repousse ce dernier plus ou moins vers l'aval.

Ledit clapet 6 comprend aussi un arbre 61 de pivotement monté à une extrémité supérieure dudit organe 60.

Selon un mode préférentiel de réalisation, le clapet 6 comprend un bras 62 de déport reliant l'organe 60 à son arbre 61. Un tel bras 62 peut avoir toute forme, préférentiellement arquée avec un creux du côté de l'arrivée 51 lorsque ledit clapet 6 est en position de fermeture.

De plus, ladite cage 5 comprend en partie supérieure, un berceau 52 conformé complémentairement pour recevoir en rotation libre ledit arbre 61 de pivotement. Ainsi, en plaçant l'arbre 61 au sein du berceau 52, l'organe 6 peut librement osciller en suspension, au travers d'une liaison en rotation ou en pivot. Lors de la mise en circulation du flux, la poussée contre l'organe 60 bascule ledit clapet 6 vers une position d'ouverture, proportionnellement ouverte en fonction du débit. Inversement, sans circulation du fluide, le poids du clapet 6 lui permet de revenir naturellement vers sa position d'équilibre, en recouvrement en aval et en fermeture de l'arrivée 51.

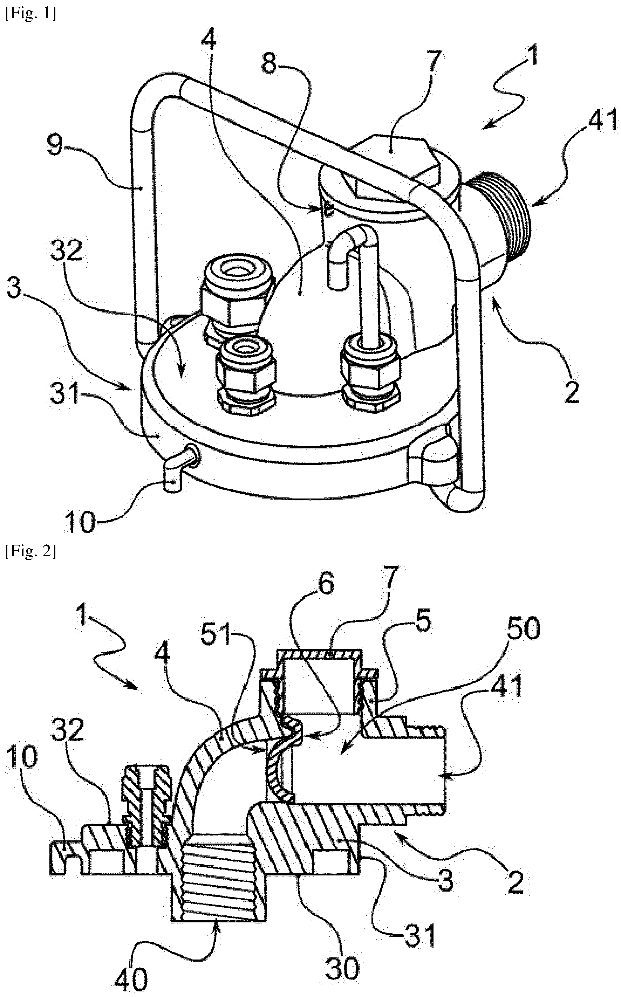

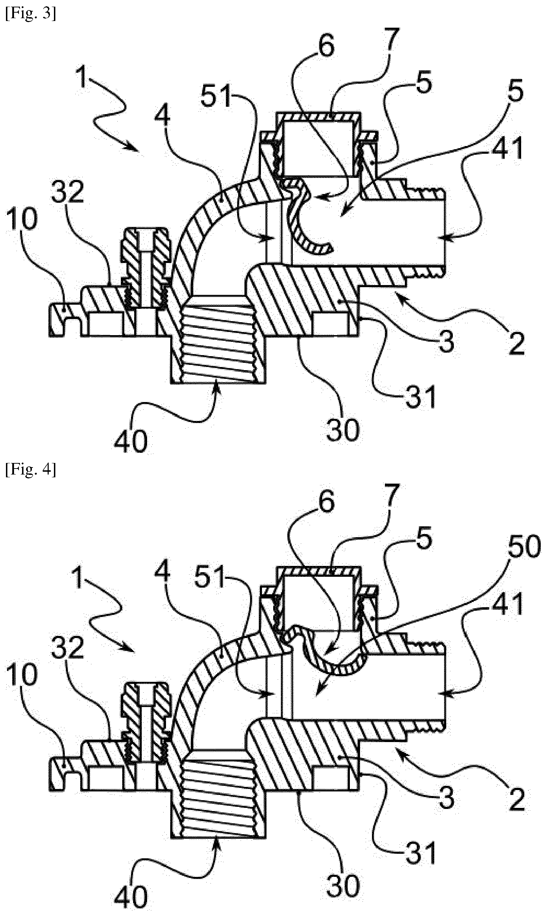

Les figures 2 à 4 montrent différentes positions du clapet 6, en particulier deux positions d'ouverture différentes, dans lesquelles ledit clapet 6 se retrouve plus ou moins escamoté, en fonction de la quantité de fluide traversant l'arrivée 51.

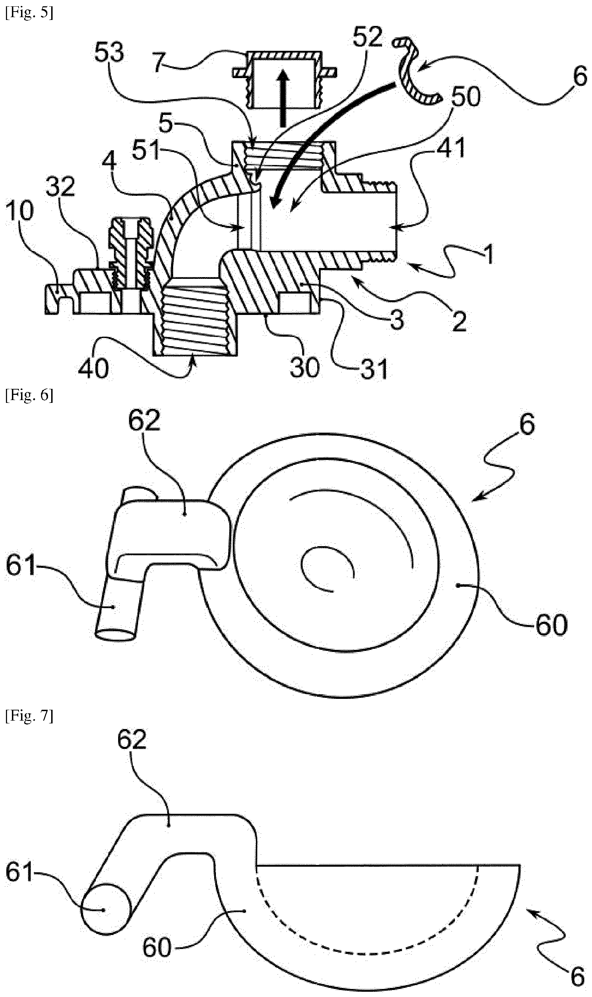

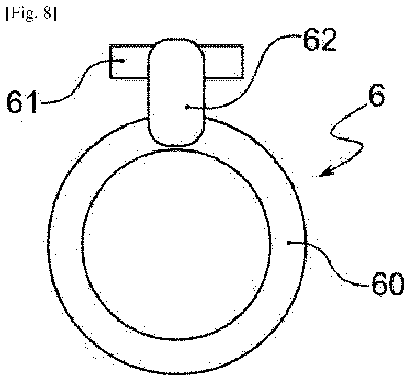

Un mode préférentiel de réalisation dudit clapet 6 est représenté sur les figures 6 à 8, montrant un organe 60 avec une coque sous forme de calotte sphérique, reliée à un bras 62 de déport arqué et conformé en U ou en C, reliant ledit organe 60 à une extrémité solidaire du chant aval de ladite coque, à un arbre 61 de pivotement à l'extrémité opposée. En outre, ledit arbre 61 présente une forme cylindrique avec deux extrémités dépassant latéralement de part et d'autre de l'extrémité opposée dudit bras 62, selon un axe en alignement avec le plan médian contenant la coque dudit organe 60.

On notera que ledit clapet 6 peut être réalisé en tout type de matériau, notamment en métal, en plastique ou en composite, de préférence à partir d'une seule pièce moulée ou usinée.

Ainsi, la liaison en rotation du clapet 6 au sein du berceau 52 consiste en un système mécanique simple et durable dans le temps, ne nécessitant que peu d'entretien.

En outre, ce clapet 6 et sa liaison mécanique offrent une meilleure étanchéité que des vannes classiques, en particulier des clapets à ressort dont l'efficacité diminue au fil du temps. De plus, le clapet 6 et sa liaison mécanique limite les raccords et joints, qui sont sources de fuites potentielles.

Par ailleurs, la position de fermeture en équilibre du clapet 6 permet de conserver le niveau de la colonne d'eau lors d'une intervention à l'intérieur de la cage 5, éviter tout déchargement et vidange, économisant la ressource en eau.

Inversement, l'ouverture du clapet 6 s'effectue librement, lors du pompage, sous l'effet du débit d'eau pompé, basculant plus ou moins ledit clapet 6.

A ce titre, le dispositif 1 de couverture est prévu pour un fluide présentant une faible viscosité, préférentiellement de l'eau, mais aussi de façon non limitative des liquides du domaine agroalimentaire, comme du vin ou des jus, voire des huiles fluides, ou encore des carburants, voire des fluides comme des gaz denses.

On entend par viscosité, la viscosité dynamique, exprimée en Pascal seconde (Pa s), anciennement le Poiseuille (Pl). Une faible viscosité s'entend au regard de la viscosité de l'eau, notamment à une température de 20°C (degrés Celsius), qui est d'environ 1 x 10⁻³ Pa s. Une faible viscosité est donc équivalente, préférentiellement inférieure ou égale à ladite viscosité de l'eau à la même température.

En outre, la viscosité du fluide en circulation doit avoir une valeur qui autorise l'écoulement au travers de l'arrivée 51 et le long de la paroi de l'organe 60 du clapet 6, notamment limitant le flux laminaire au contact de ces parois.

Selon un mode de réalisation, ladite cage 5 comprend supérieurement au moins une ouverture 53 d'accès, débouchant à l'intérieur dudit volume 50 interne dudit coude 4. De plus, le dispositif 1 de couverture comprend un bouchon 7 de fermeture hermétique de ladite ouverture 53 d'accès.

Dès lors, ledit bouchon 7 présente une forme et des dimensions complémentaires à celles de ladite ouverture 53. Préférentiellement, le bouchon 7 présente une forme globalement cylindrique, coopérant avec une section circulaire de ladite ouverture 53. Selon un mode préférentiel de réalisation, le bouchon 7 comprend inférieurement une partie mâle avec un filetage, qui coopère par vissage avec un filetage complémentaire ménagé supérieurement au sein de ladite ouverture 53.

Selon un mode de réalisation, l'arbre 61 du clapet 6 est maintenu au sein du berceau 52, simplement du fait de son poids et la forme concave arrondie dudit berceau 52.

Selon un mode préférentiel de réalisation, ledit bouchon 7 comprend un chant inférieur, venant en verrouillage dudit arbre 61 de pivotement du clapet 6 au sein du berceau 52, en fermeture hermétique de ladite ouverture 53 d'accès par ledit bouchon 7. En d'autres termes, le vissage du bouchon 7 avec l'ouverture 53 vient refermer supérieurement le berceau 52, empêchant l'arbre 61 de s'en extraire ainsi bloqué supérieurement, tout en autorisant la rotation dudit arbre 61 et laissant libre le clapet 6 de s'ouvrir et se fermer au passage du flux.

Inversement, une fois le bouchon 7 retiré, l'accès au travers de l'ouverture 53 permet de retirer le clapet 6.

On notera que l'ouverture 53 est dimensionnée pour permettre l'insertion et l'extraction dudit clapet 6, facilitant son entretien et son remplacement, comme visible sur la [Fig.5].

Selon un mode de réalisation, ledit dispositif 2 de couverture prévoit de contrôler plusieurs paramètres, en particulier de détection des fuites de fluide en aval, au travers du mouvement non sollicité dudit clapet 6.

Pour ce faire, ledit bouchon 7 comprend au moins un capteur de mesure du déplacement dudit clapet 6.

Selon un autre de réalisation, d'autres paramètres peuvent être mesurés, au travers de capteurs positionnés au sein dudit bouchon 7, les positionnant au plus près à l'intérieur du corps 2 du dispositif 1, tout en les rendant aisément accessibles.

De façon non exhaustive, ces capteurs peuvent mesurer le débit ou la quantité de fluide du flux traversant l'arrivée 51 ou pénétrant à l'intérieur de la cage 5, mesurer la température interne de la cage 5 ou du fluide en circulation, mesurer la pression de l'air à l'intérieur de ladite cage 5 ou encore mesurer la qualité de l'eau et détecter la présence de polluants ou de contaminants.

Ainsi, il est possible de superviser les volumes d'eau utilisés et les périodes d'activation, facilitant la gestion de la ressource en eau, mais aussi autorisant des contrôles par un intervenant dédié, par exemple en cas de sécheresse et de restrictions liées à une utilisation réglementée de l'eau des nappes souterraines.

De plus, ledit dispositif 1 de couverture peut comprendre des moyens d'alerte, lors du pompage, à savoir de la mise en circulation du fluide par actionnement de la pompe. Ces moyens d'alerte peuvent être de toute forme, notamment une alarme sonore, mais préférentiellement de façon visuelle, sous la forme d'un ou plusieurs voyants lumineux (vert ou rouge).

Couplés avec la détection du mouvement du clapet 6, ces moyens d'alerte permettent aisément de vérifier la bonne marche de l'installation, mais aussi de visualiser la présence d'une fuite ou d'un dysfonctionnement.

Selon un mode de réalisation, le dispositif 1 de couverture peut être équipé de moyens de connexion à un réseau de communication, de préférence sans fil. Ces moyens peuvent être de tout type, notamment électronique ou informatique, permettant de transmettre à distance des données enregistrées, comme la consommation en eau.

Selon un mode de réalisation, comme visible sur la [Fig.1], ledit dispositif 1 de couverture comprend des moyens de verrouillage en fermeture dudit bouchon, sous forme d'au moins deux anneaux 8 solidaires dudit corps 2 et dudit bouchon 7. Ces anneaux 8 s'étendent en saillie latéralement, sous forme de boucles, permettant de relier le bouchon 7 au corps 2, par l'intermédiaire d'un lien sécurisant les deux éléments entre eux. Un tel lien peut être un cadenas ou encore des scellés officiels.

Selon un mode de réalisation, ledit dispositif 2 de couverture comprend un arceau 9 de préhension rapporté en fixation amovible dudit corps 2.

Un tel arceau 9 sert de poignée, permettant un levage manuel du dispositif 1 ou bien au moyen d'une engin ou d'un matériel de levage.

Selon un mode préférentiel de réalisation, comme visible sur la [Fig.1], ledit arceau 1 présente une forme tubulaire, arquée avec une portion centrale sensiblement horizontale, prolongée par deux portions verticales de chaque côté, dont les extrémités sont solidarisées sur ledit corps 2. En particulier, des logements peuvent être ménagés au sein dudit corps 21, au niveau du couvercle 3, notamment sur son pourtour. Ces logements, diamétralement opposés, permettent de recevoir en fixation les extrémités dudit arceau 9.

En outre, la fixation de l'arceau 9 peuvent être prévue amovible, autorisant sa mise en place lors des opérations de levage du pour la pose et la dépose du dispositif 1 de couverture, puis de le retirer une fois en place.

Selon un mode de réalisation, ledit dispositif 2 de couverture comprend au moins un crochet 10 ménagé en saillie dudit corps 2, ledit crochet 10 étant ouvert vers la face inférieure dudit couvercle 3.

Un tel crochet 10 ainsi orienté permet de lever en suspension depuis au moins un côté le dispositif 2 de couverture, au moyen d'un engin ou de matériel de levage, sécurisant l'opération de dépose et d'entretien, en particulier la connexion et la déconnexion de l'entrée 40 avec l'extrémité supérieure de la conduite, ainsi que le positionnement de la face 30 inférieure du couvercle 3 sur la tête du puits de forage.

Ce crochet 10 peut aussi servir à sécuriser un élément avec le corps 2, au travers d'une corde ou d'une sangle, comme la pompe lors de son entretien.

L'invention concerne aussi une station de pompage d'un puits de forage.

Une telle station comprend un tube de renforcement d'une cavité dudit puits de forage, avec une extrémité supérieure formant une tête dudit puits de forage.

Ladite station comprend encore des moyens de pompage, sous forme d'une pompe immergée ou externe, ainsi qu'une une conduite d'alimentation s'étendant le long dudit tube jusqu'à ladite tête.

De façon connexe, la station peut comprendre d'autres canalisations, comme un câblage d'alimentation électrique de la pompe immergée, une canalisation pour la circulation des flux d'air, notamment de la dépression, pour une pompe externe.

Avantageusement, ladite station comprend, raccordé à ladite conduite et en recouvrement de ladite tête, un dispositif 1 de couverture d'une tête dudit puits de forage selon l'invention et selon les modes de réalisation précédemment décrits.

Selon un mode de réalisation, ladite station comprend, connectés audit dispositif 1 de couverture, des moyens de commande de ladite pompe et du débit du flux de la conduite d'alimentation. De tels moyens de commande peuvent être de tout type, comme un interrupteur ou une vanne, voire une électrovanne. Ces moyens de commande peuvent aussi être contrôlés localement ou à distance, au travers d'un réseau de communication, de préférence sans fil, via une interface homme-machine.

Ainsi, la station de pompage et son dispositif 1 de couverture de la tête du puits de forage protège l'intérieur de tous les éléments extérieurs, tel que des poussières, cailloux ou végétaux, ainsi que les insectes et les animaux, susceptibles de polluer l'eau, d'obstruer les canalisations, ou encore d'endommager la pompe immergée. L'invention permet ainsi d'assurer la qualité de l'eau de la nappe souterraine.

En outre, l'invention permet de sortir facilement et en toute sécurité la pompe immergée, ainsi que les câbles d'alimentation électrique, quelle que soit la profondeur du forage.

Le dispositif 1 de couverture est facile et rapide à poser, générant une gain de temps considérable pour un installateur, versé dans le domaine de la plomberie, sans qualification supplémentaire.

De plus, ainsi raccordé en permanence sur le tube de la tête du puits de forage, le dispositif 1 de couverture est accessible, facilitant toute intervention de maintenance et de dépannage.

Enfin, le dispositif 1 de couverture avec son corps monobloc, ainsi que son clapet 6 en une seule pièce avec une liaison mécanique simple, confèrent un coût restreint et une longévité accrue.

## Revendications

1. Dispositif (1) de couverture d'une tête de puits de forage, comprenant
- un corps (2) pourvu d'un couvercle (3) avec au moins une face (30) inférieure de portée, conformée complémentairement pour venir en recouvrement d'un tube de ladite tête du puits de forage ;
- un coude (4) traversant ledit couvercle (3) et assurant la circulation selon une direction s'étendant depuis l'amont vers l'aval d'un flux de fluide, de préférence de l'eau, ledit coude (4) étant orienté orthogonalement
i) depuis une entrée (40) amont débouchant verticalement sous ladite face (30) inférieure, ladite entrée (40) étant conformée complémentairement pour coopérer en fixation étanche avec une extrémité supérieure d'une conduite d'alimentation dudit puits de forage ;
ii) jusqu'à une sortie (41) aval débouchant horizontalement à l'extérieur ;
**caractérisé en ce que**
ledit coude (4) comprend intérieurement une cage (5), avec un volume (50) interne pourvu d'une arrivée (51) reliée à ladite entrée (40), ladite arrivée (51) étant située à la fin d'une portion tournante du coude de sorte qu'une section transversale de l'arrivée (51) s'étende sensiblement verticalement, de préférence verticalement ;
et **en ce que**
ledit dispositif (1) de couverture comprend
- un clapet (6) monté mobile à l'intérieur du volume (50) interne de la cage (5) dudit coude (4), depuis une position de fermeture de ladite arrivée (51) vers au moins une position d'ouverture, et inversement ;
ledit clapet (6) étant monté libre en basculement par rapport audit coude (4), ledit clapet (6) revenant naturellement, uniquement sous l'effet de la gravité et de son poids, depuis ladite au moins une position d'ouverture vers ladite position de fermeture.

2. Dispositif (1) de couverture selon la revendication précédente, **caractérisé en ce que**
ledit clapet (6) comprend
- un organe (60) d'obturation, conformé complémentairement à une section de ladite arrivée (51) ;
- un arbre (61) de pivotement monté à une extrémité supérieure dudit organe (60) ;
ladite cage (5) comprenant en partie supérieure, un berceau (52) conformé complémentairement pour recevoir en rotation libre ledit arbre (61) de pivotement.

3. Dispositif (1) de couverture selon la revendication précédente, **caractérisé en ce que**
- ledit organe (60) est conformé en coque concave du côté aval, de sorte que la mise en circulation dudit flux selon ladite direction assure une pression contre une paroi amont de ladite coque et repousse ledit clapet (6) vers ladite au moins une position d'ouverture.

4. Dispositif (1) de couverture selon l'une quelconque des revendications précédentes, **caractérisé en ce que**
ladite cage (5) comprend supérieurement
- au moins une ouverture (53) d'accès, débouchant à l'intérieur dudit volume (50) interne de la cage (5) dudit coude (4) ;
le dispositif (1) de couverture comprenant
- un bouchon (7) de fermeture hermétique de ladite ouverture (51) d'accès.

5. Dispositif (1) de couverture selon les revendications 2 et 4, **caractérisé en ce que**
- ledit bouchon (7) comprend un chant inférieur, venant en verrouillage dudit arbre (61) de pivotement du clapet (6) au sein du berceau, en fermeture hermétique de ladite ouverture (51) d'accès par ledit bouchon (7).

6. Dispositif (1) de couverture selon l'une quelconque des revendications 4 ou 5 précédentes, **caractérisé en ce que**
- ledit bouchon (7) comprend au moins un capteur de mesure du déplacement dudit clapet (6).

7. Dispositif (1) de couverture selon l'une quelconque des revendications 4 à 6, **caractérisé en ce qu'**il comprend
- des moyens de verrouillage en fermeture dudit bouchon (7), sous forme d'au moins deux anneaux (8) solidaires dudit corps (2) et dudit bouchon (7).

8. Dispositif (1) de couverture selon l'une quelconque des revendications précédentes, **caractérisé en ce que**
- ladite sortie (41) comprend une partie femelle filetée.

9. Dispositif (1) de couverture selon l'une quelconque des revendications précédentes, **caractérisé en ce qu'**il comprend
- un arceau (9) de préhension rapporté en fixation amovible dudit corps (2).

10. Dispositif (1) de couverture selon l'une quelconque des revendications précédentes, **caractérisé en ce qu'**il comprend
- au moins un crochet (10) ménagé en saillie dudit corps (2), ledit crochet (10) étant ouvert vers la face (30) inférieure dudit couvercle (3).

11. Station de pompage d'un puits de forage, comprenant
- un tube de renforcement d'une cavité dudit puits de forage, avec une extrémité supérieure formant une tête dudit puits de forage ;
- des moyens de pompage, sous forme d'une pompe immergée ou externe ;
- une conduite d'alimentation s'étendant le long dudit tube jusqu'à ladite tête ; **caractérisée en ce qu'**elle comprend
- raccordé à ladite conduite et en recouvrement de ladite tête, un dispositif de couverture (1) d'une tête dudit puits de forage selon l'une quelconque des revendications précédentes.

12. Station de pompage selon la revendication précédente **caractérisée en ce qu'**elle comprend
- connectés audit dispositif (1) de couverture, des moyens de commande de ladite pompe et du débit du flux de la conduite d'alimentation.

## Patentansprüche

1. Vorrichtung (1) zum Abdecken eines Bohrlochkopfes, umfassend
- einen Körper (2), der mit einem Deckel (3) mit mindestens einer unteren Auflagefläche (30) versehen ist, der komplementär ausgebildet ist, um ein Rohr des Bohrlochkopfes abzudecken;
- ein den Deckel (3) überquerendes Winkelstück (4), das die Zirkulation eines Fluidstroms, vorzugsweise Wasser, in Richtung von stromaufwärts nach stromabwärts sicherstellt, wobei das Winkelstück (4) orthogonal ausgerichtet ist
i) von einem stromaufwärts gelegenen Einlass (40), der vertikal unterhalb der unteren Fläche (30) mündet, wobei der Einlass (40) komplementär ausgebildet ist, um mit dem oberen Ende einer Zuleitung des Bohrlochs eine wasserdichte Verbindung herzustellen;
ii) bis zu einem stromabwärts gelegenen Auslass (41), der horizontal nach außen mündet;
**dadurch gekennzeichnet, dass**
das Winkelstück (4) im Inneren einen Käfig (5) mit einem Innenraum (50) umfasst, der mit einem Eingang (51) versehen ist, der mit dem Einlass (40) verbunden ist, wobei der Eingang (51) sich am Ende eines drehbaren Abschnitts des Winkelstücks befindet, sodass sich der Querschnitt des Eingangs (51) im Wesentlichen vertikal, vorzugsweise vertikal, erstreckt;
und **dadurch, dass**
die Abdeckungsvorrichtung (1) umfasst:
- ein Ventil (6), das beweglich im Innenraum (50) des Käfigs (5) des Winkelstücks (4) angebracht ist, von einer geschlossenen Position des Eingangs (51) in mindestens eine offene Position und umgekehrt;
wobei das Ventil (6) relativ zum Winkelstück (4) frei kippbar gelagert ist, wobei das Ventil (6) auf natürliche Weise, nur unter dem Einfluss der Schwerkraft und seines Gewichts, von der mindestens einen offenen Position in die geschlossene Position zurückkehrt.

2. Abdeckungsvorrichtung (1) nach dem vorstehenden Anspruch,
**dadurch gekennzeichnet, dass**
das Ventil (6) umfasst:
- ein Dichtungselement (60), das komplementär zu einem Abschnitt des Eingangs (51) ausgebildet ist;
- eine Schwenkwelle (61), die an einem oberen Ende des Elements (60) angebracht ist; wobei der Käfig (5) in seinem oberen Teil eine Wiege (52) umfasst, die komplementär ausgebildet ist, um die Schwenkwelle (61) in freier Drehung aufzunehmen.

3. Abdeckungsvorrichtung (1) nach dem vorstehenden Anspruch,
**dadurch gekennzeichnet, dass**
- das Element (60) auf der stromabwärts gelegenen Seite zu einer konkaven Schale ausgebildet ist, sodass die Zirkulation des Flusses gemäß der Richtung einen Druck gegen eine stromaufwärts gelegene Wand der Schale sicherstellt und das Ventil (6) in Richtung der mindestens einen offenen Position drückt.

4. Abdeckungsvorrichtung (1) nach einem der vorstehenden Ansprüche,
**dadurch gekennzeichnet, dass**
der Käfig (5) oben umfasst:
- mindestens eine Zugangsöffnung (53), die in das Innere des Innenraums (50) des Käfigs (5) des Winkelstücks (4) mündet;
die Abdeckungsvorrichtung (1), umfassend
- einen hermetischen Verschlussstopfen (7) für die Zugangsöffnung (51).

5. Abdeckungsvorrichtung (1) nach den Ansprüchen 2 und 4,
**dadurch gekennzeichnet, dass**
- der Stopfen (7) eine Unterkante umfasst, die in die Verriegelung der Schwenkwelle (61) des Ventils (6) innerhalb der Wiege eingreift und die Zugangsöffnung (51) durch den Stopfen (7) hermetisch verschließt.

6. Abdeckungsvorrichtung (1) nach einem der vorstehenden Ansprüche 4 oder 5, **dadurch gekennzeichnet, dass**
- der Stopfen (7) mindestens einen Sensor zur Messung der Auslenkung des Ventils (6) umfasst.

7. Abdeckungsvorrichtung (1) nach einem der Ansprüche 4 bis 6,
**dadurch gekennzeichnet, dass** sie umfasst:
- Verriegelungsmittel zum Verschließen des Stopfens (7) in Form von mindestens zwei Ringen (8), die einstückig mit dem Körper (2) und dem Stopfen (7) verbunden sind.

8. Abdeckungsvorrichtung (1) nach einem der vorstehenden Ansprüche, **dadurch gekennzeichnet, dass**
- der Auslass (41) ein Innengewinde umfasst.

9. Abdeckungsvorrichtung (1) nach einem der vorstehenden Ansprüche, **dadurch gekennzeichnet, dass** sie umfasst:
- einen als abnehmbare Befestigung an dem Körper (2) angebrachten Greifbogen (9).

10. Abdeckungsvorrichtung (1) nach einem der vorstehenden Ansprüche, **dadurch gekennzeichnet, dass** sie umfasst:
- mindestens einen Haken (10), der von dem Körper (2) absteht, wobei der Haken (10) zur Unterseite (30) des Deckels (3) hin geöffnet ist.

11. Pumpstation für ein Bohrloch, umfassend:
- ein Verstärkungsrohr für einen Hohlraum des Bohrlochs, dessen oberes Ende einen Kopf des Bohrlochs bildet;
- Pumpenmittel, in Form einer Tauchpumpe oder einer externen Pumpe;
- eine Zuleitung, die sich entlang des Rohrs bis zum Kopf erstreckt;
**dadurch gekennzeichnet, dass** sie umfasst:
- mit der Leitung verbunden und den Kopf abdeckend, eine Abdeckvorrichtung (1) für den Kopf des Bohrlochs nach einem der vorstehenden Ansprüche.

12. Pumpstation nach dem vorstehenden Anspruch,
**dadurch gekennzeichnet, dass** sie umfasst:
- mit der Abdeckungsvorrichtung (1) verbunden, Mittel zur Steuerung der Pumpe und der Durchflussmenge der Zuleitung.

## Claims

1. Device (1) for covering a wellbore head, comprising
- a body (2) provided with a cover (3) with at least one lower bearing face (30), complementarily shaped to cover a tube of said wellbore head;
- a bend (4) passing through said cover (3) and ensuring the circulation of a flow of fluid, preferably water, in a direction extending from upstream to downstream, said bend (4) being orthogonally oriented
i) from an upstream inlet (40) opening vertically below said lower face (30), said inlet (40) being complementarily shaped to sealingly engage with an upper end of a supply line of said wellbore;
ii) to a downstream outlet (41) opening horizontally to the outside;
**characterized in that**
said bend (4) internally comprises a cage (5), with an internal volume (50) provided with a port (51) connected to said inlet (40), said port (51) being located at the end of a curved portion of the bend so that a cross-section of the port (51) extends substantially vertically, preferably vertically;
and **in that**
said covering device (1) comprises
- a valve (6) which is movably mounted within the internal volume (50) of the cage (5) of said bend (4), from a position for closing said port (51) to at least one open position, and vice versa;
said valve (6) being mounted to tilt freely with respect to said bend (4), said valve (6) returning naturally, solely under the effect of gravity and its weight, from said at least one open position to said closed position.

2. Covering device (1) according to the preceding claim,
**characterized in that**
said valve (6) comprises
- a shut-off member (60), shaped to be complementary to a section of said port (51);
- a pivot shaft (61) mounted at an upper end of said member (60); said cage (5) comprising, in its upper portion, a cradle (52) which is complementarily shaped to receive said pivot shaft (61) in free rotation.

3. Covering device (1) according to the preceding claim,
**characterized in that**
- said member (60) is in the shape of a concave shell on the downstream side, so that circulating said flow in said direction provides pressure against an upstream wall of said shell and pushes said valve (6) toward said at least one open position.

4. Covering device (1) according to any one of the preceding claims,
**characterized in that**
said cage (5) comprises at the top
- at least one access opening (53), opening into said internal volume (50) of the cage (5) of said bend (4);
the covering device (1) comprising
- a cap (7) for sealing said access opening (51).

5. Covering device (1) according to claims 2 and 4, **characterized in that**
- said cap (7) comprises a lower edge, locking said shaft (61) for pivoting the valve (6) within the cradle, sealing said access opening (51) by means of said cap (7).

6. Covering device (1) according to any one of the preceding claims 4 or 5, **characterized in that**
- said cap (7) comprises at least one sensor for measuring the movement of said valve (6).

7. Covering device (1) according to any one of claims 4 to 6,
**characterized in that** it comprises
- means for locking said cap (7) in a closed position, in the form of at least two rings (8) secured to said body (2) and said cap (7).

8. Covering device (1) according to any one of the preceding claims, **characterized in that**
- said outlet (41) comprises a threaded female portion.

9. Covering device (1) according to any one of the preceding claims, **characterized in that** it comprises
- a handle (9) which is removably attached to the body (2).

10. Covering device (1) according to any one of the preceding claims, **characterized in that** it comprises
- at least one hook (10) projecting from said body (2), said hook (10) being open toward the lower face (30) of said cover (3).

11. Wellbore pumping station, comprising
- a tube for reinforcing a cavity of said wellbore, with an upper end forming a head of said wellbore;
- pumping means, in the form of a submersible or external pump;
- a supply line extending along said tube to said head;
**characterized in that** it comprises
- connected to said line and covering said head, a device (1) for covering a head of said wellbore according to any one of the preceding claims.

12. Pumping station according to the preceding claim, **characterized in that** it comprises
- connected to said covering device (1), means for controlling said pump and the flow rate of the supply line.
